# EUROPEAN PATENT APPLICATION

(11) **EP 4 480 754 A1**
(43) Date of publication of application: **25.12.2024**
(21) Application number: 24177437.1
(22) Date of filing: 22.05.2024
(51) Int. Cl.: B60R 1/24, B60R 1/28

(54) **INERTIAL CAMERA SCENE MOTION COMPENSATION**

(30) Priority: 12.06.2023 US 202318333362
(71) Applicant: Honeywell International Inc., Charlotte, NC 28202 (US)
(72) Inventor: SUDDRETH, John, Charlotte, 28202 (US); LEIPHON, Kenneth, Charlotte, 28202 (US); CAUFIELD, Sean, Charlotte, 28202 (US)
(74) Representative: LKGlobal UK Ltd.

(57) **Abstract**

A virtual window system for a vehicle is disclosed. The virtual window system includes a display device and a controller. The controller is configured to: receive an image of a scene in a field of view (FOV) of an imaging system of the vehicle at an image capture time; predict a vehicle location at a predicted image display time; translate the image to a predicted image having an estimated view of the scene from the vehicle at the predicted vehicle location based on a predicted render time, a predicted display time, an amount of predicted position change between vehicle position at the image capture time and predicted vehicle position at the predicted image display time; and cause the translated image to be displayed on the display device at the predicted image display time.

## Description

### TECHNICAL FIELD

The technology described in this patent document relates generally to display systems and more particularly to virtual display systems.

### BACKGROUND

See-thru display systems, such as head-up displays (HUDs), are used in vehicles to allow an operator of the vehicle to view the external environment, for example, for navigation and obstacle avoidance. There are times when see-thru displays are not advantageous, but a view of the external environment is still desired.

Accordingly, it is desirable to provide systems for providing a window-like view of an external environment. Furthermore, other desirable features and characteristics of the present invention will become apparent from the subsequent detailed description of the invention and the appended claims, taken in conjunction with the accompanying drawings and the background of the invention.

### SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, a virtual window system for a vehicle is disclosed. The virtual window system includes a display device and a controller. The controller is configured to: receive an image of a scene in a field of view (FOV) of an imaging system of the vehicle at an image capture time; predict a vehicle location at a predicted image display time; translate the image to a predicted image having an estimated view of the scene from the vehicle at the predicted vehicle location based on a predicted render time, a predicted display time, an amount of predicted position change between vehicle position at the image capture time and predicted vehicle position at the predicted image display time; and cause the translated image to be displayed on the display device at the predicted image display time.

In another embodiment, a method for providing an image of a scene outside of a moving vehicle is disclosed. The method includes: receiving an image of a scene in a field of view (FOV) of an imaging system in the vehicle at an image capture time; predicting a vehicle location at a predicted image display time; translating the image to a predicted image having an estimated view of the scene from the vehicle at the predicted vehicle location based on a predicted render time, a predicted display time, an amount of predicted position change between vehicle position at the image capture time and predicted vehicle position at the predicted image display time; and displaying the translated image on a display device at the predicted image display time.

In another embodiment, non-transitory computer readable media encoded with programming instructions configurable to cause a processor to perform a method is disclosed. The method includes: receiving an image of a scene in a field of view (FOV) of an imaging system in the vehicle at an image capture time; predicting a vehicle location at a predicted image display time; translating the image to a predicted image having an estimated view of the scene from the vehicle at the predicted vehicle location based on a predicted render time, a predicted display time, an amount of predicted position change between vehicle position at the image capture time and predicted vehicle position at the predicted image display time; and displaying the translated image on a display device at the predicted image display time.

In another embodiment, a vehicle is disclosed. The vehicle includes an imaging system that includes a plurality of imaging sensors, a display device, and a controller. The controller is configured to: receive an image of a scene in a field of view (FOV) of the imaging system at an image capture time; predict a vehicle location at a predicted image display time; translate the image to a predicted image having an estimated view of the scene from the vehicle at the predicted vehicle location based on a predicted render time, a predicted display time, an amount of predicted position change between vehicle position at the image capture time and predicted vehicle position at the predicted image display time; and cause the translated image to be displayed on the display device at the predicted image display time.

Furthermore, other desirable features and characteristics will become apparent from the subsequent detailed description and the appended claims, taken in conjunction with the accompanying drawings and the preceding background.

### BRIEF DESCRIPTION OF THE DRAWINGS

Embodiments of the subject matter will hereinafter be described in conjunction with the following drawing figures, wherein like numerals denote like elements, and wherein:
FIG. 1 is a diagram depicting a side view of an example moving vehicle at two instances in time and an outside view of a scene in front of the moving vehicle at the same two different instances in time, in accordance with some embodiments;
FIG. 2 is a block diagram depicting vehicle components of an example vehicle that includes a virtual window system, in accordance with some embodiments;
FIG. 3 is an example timeline that illustrates timing between when an image is acquired and when the imaged is displayed, in accordance with some embodiments;
FIGS. 4A-4C are block diagrams illustrating example scenarios for application of one or more of a scenery angle change factor (ACF), a scaling factor (SCF), and a sliding factor (SLF), in accordance with some embodiments;
FIG. 5 is a process flow chart depicting an example process for providing an image of a scene outside of a moving vehicle, in accordance with some embodiments.

### DETAILED DESCRIPTION

The following detailed description is merely exemplary in nature and is not intended to limit the application and uses. Furthermore, there is no intention to be bound by any expressed or implied theory presented in the preceding technical field, background, summary, or the following detailed description. As used herein, the term "module" refers to any hardware, software, firmware, electronic control component, processing logic, and/or processor device, individually or in any combination, including without limitation: application specific integrated circuit (ASIC), a field-programmable gate-array (FPGA), an electronic circuit, a processor (shared, dedicated, or group) and memory that executes one or more software or firmware programs, a combinational logic circuit, and/or other suitable components that provide the described functionality.

Embodiments of the present disclosure may be described herein in terms of functional and/or logical block components and various processing steps. It should be appreciated that such block components may be realized by any number of hardware, software, and/or firmware components configured to perform the specified functions. For example, an embodiment of the present disclosure may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments of the present disclosure may be practiced in conjunction with any number of systems, and that the systems described herein is merely exemplary embodiments of the present disclosure.

For the sake of brevity, conventional techniques related to signal processing, data transmission, signaling, control, and other functional aspects of the systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in an embodiment of the present disclosure.

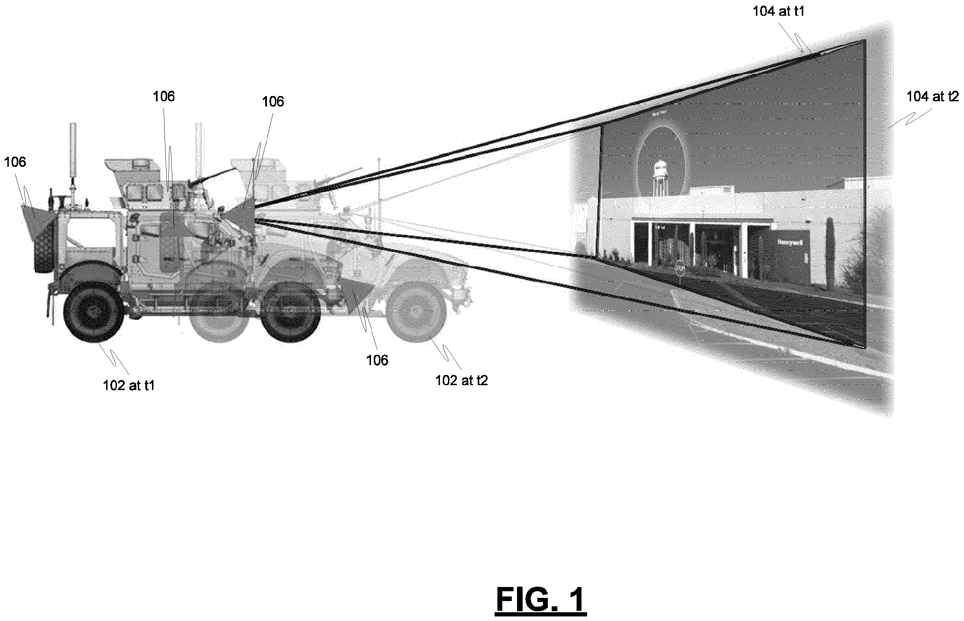

FIG. 1 is a diagram depicting a side view of an example moving vehicle 102 at two instances in time (t1, t2) and an outside view of a scene 104 in front of the moving vehicle 102 at the same two different instances in time (t1, t2). The example vehicle 102 includes a virtual window system (not shown) that is configured to provide a realistic outside view of the scene in front of the vehicle from within the vehicle. The example vehicle 102 may be a windowless vehicle, in which case, the virtual window system functions as a virtual reality (VR) system that provides a computer-generated view of the scene in front of the vehicle. The example vehicle 102 may have a window for providing a view outside of the vehicle, in which case, the virtual window system may function as an augmented reality (AR) system that overlays a computer-generated view of the scene in front of the vehicle over a field of view (FOV) of the real environment in front of the vehicle, a hybrid VR/AR system that functions in some instances as a VR system and some instances as an AR system, or a VR system.

The example vehicle 102 includes an imaging system that includes one or more image sensor(s) 106 for capturing images of the scene around the vehicle at various instances in time, such as at t1 and t2. The image sensor(s) may include time of flight (ToF) cameras, vertical-cavity surface-emitting laser (VCSEL) based light detection and ranging (LiDAR), binocular depth sensing, structured-light sensors, forward and rear-facing video cameras, and/or others. The image sensor(s) may generate point clouds or other forms of imaging data from which an image may be generated. The virtual window system (not shown) is configured to generate a view on a display device inside of the vehicle 102 based on data captured by the image sensor(s) 106. The display device may display 2-D and/or 3-D content.

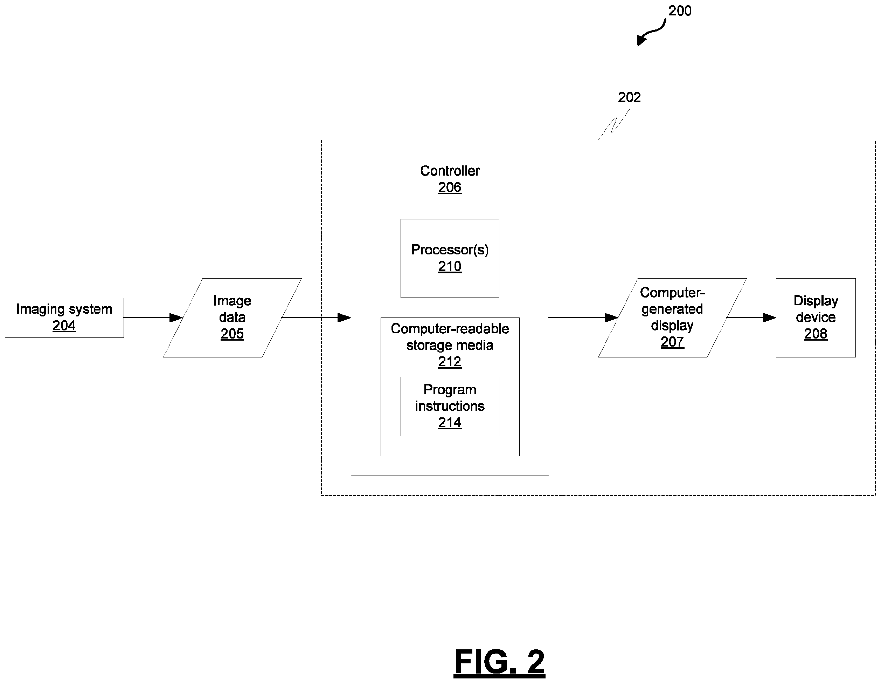

FIG. 2 is a block diagram depicting vehicle components 200 of an example vehicle (e.g., vehicle 102) that includes a virtual window system. The example vehicle components 200 include a virtual window system 202 and an imaging system 204 comprising one or more image sensor(s). The example imaging system 204 captures image data 205 (e.g., point clouds, camera images, video images, and/or others) of a scene around the vehicle, and the example virtual window system 202 is configured to generate a computer-generated display 207 based on the image data 205 captured by the imaging system 204 that estimates the scene in the FOV of the vehicle and present the computer-generated display 207 for display on a display device 208 inside of the vehicle.

The example virtual window system 202 includes a controller 206 that is configured to generate the computer-generated display 207 for the display device 208. The controller 206 includes at least one processor 210 and computer-readable storage device or media 212 encoded with programming instructions 214 for configuring the controller 206. The processor 210 may be any custom-made or commercially available processor, a central processing unit (CPU), a graphics processing unit (GPU), an application specific integrated circuit (ASIC), a field programmable gate array (FPGA), an auxiliary processor among several processors associated with the controller, a semiconductor-based microprocessor (in the form of a microchip or chip set), any combination thereof, or generally any device for executing instructions.

The computer readable storage device or media 212 may include volatile and nonvolatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable programming instructions, used by the controller 206.

The example controller 206 is configured by the programming instructions 214 on the non-transitory computer readable media 212 to receive and/or retrieve image data 205 from the imaging system 204 of a scene in a field of view (FOV) of the imaging system 204 at a predetermined capture rate. In various embodiments, the controller 206 is configured to instruct or otherwise call the imaging system 204 to capture images at a predetermined capture rate.

The example controller 206 is configured by the programming instructions 214 to replace any previously captured image in the FOV of the imaging system with a most recently captured image in the FOV of the imaging system at the predetermined capture rate. The example controller 206 is configured by the programming instructions 214 to translate, at a predetermined render rate, the most recently captured image to an estimated image that provides a predicted view of the scene in the FOV of the imaging system at a predicted display time at which the estimated image is to be display.

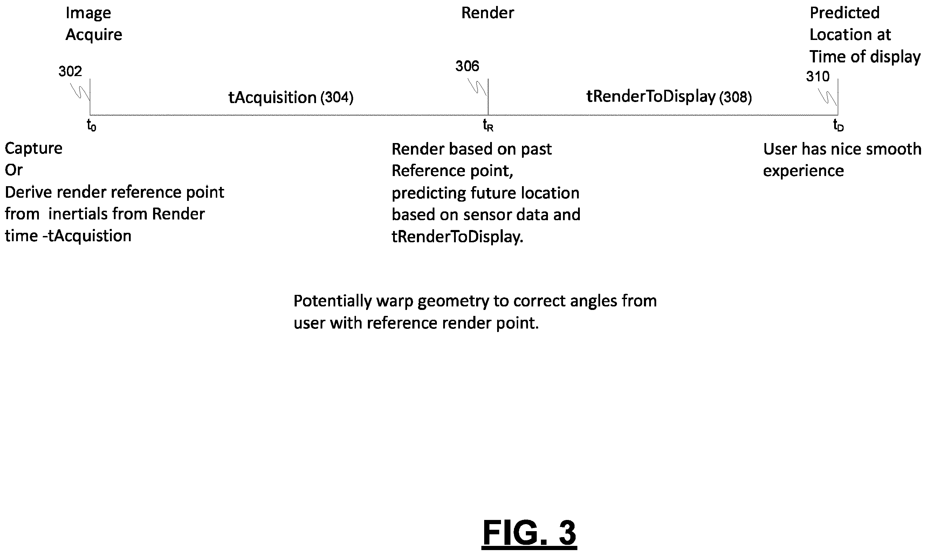

FIG. 3 is an example timeline that illustrates timing between when an image is acquired and when the imaged is displayed. In this example, an image may be acquired at image capture time t₀ (302). The imaging system may take a time period a_{cquisition} (304) between the image capture time t₀ (302) and a render time t_{R} (306) to produce an image that can be rendered, wherein the render time t_{R} (306) is the time at which the processing of imaging data is complete to generate an image that may be rendered on a display device. The window system may further take a time period t_{RenderToDisplay} (308) between the render time t_{R} (306) and a display time to (310) to display a rendered image, wherein the display time to (310) is the actual time at which the rendered image will be displayed. The capture time t₀ (302) may be captured directly by the imaging system or derived from the render time t_{R} (306) minus the time period a_{cquisition} (304). The capture location may be captured directly or derived from inertial position and/or velocity data from an inertial measurement unit (IMU), and/or velocity, acceleration, or position data from another sensor such as a velocity sensor, an acceleration sensor, a satellite based vehicle positioning sensor, a GPS sensor, or other sensor, and from the render time t_{R} (306) minus the time period a_{cquisition} (304). The predicted location at time of display may be estimated based on inertial position and/or velocity data from the IMU, and/or velocity, acceleration, or position data from another sensor such as a velocity sensor, an acceleration sensor, a satellite based vehicle positioning sensor, a GPS sensor, or other sensor at render time t_{R} (306) and from the time period a_{cquisition} (304).

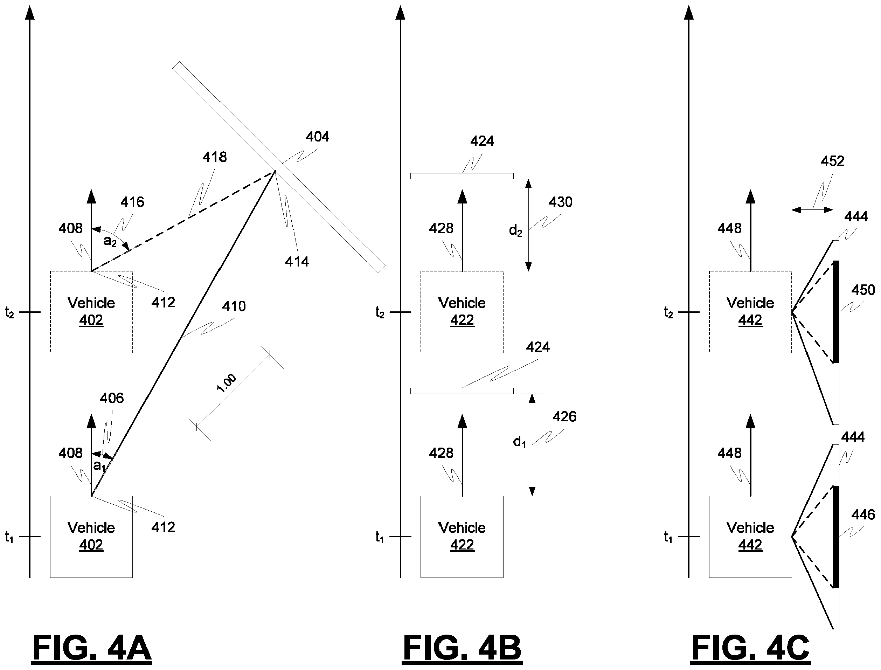

Referring back to FIG. 2, the example controller 206 is configured to translate the most recently captured image to an estimated image that provides a predicted view of the scene in the FOV of the imaging system at a predicted display time at which the estimated image is to be display by: retrieving the most recently captured image, and translating the most recently captured image to the estimated image based on the predicted display time, an amount of predicted position change between vehicle position at the image capture and predicted vehicle position at the predicted display time, and an amount of scenery angle change between a scenery angle at the image capture and a scenery angle at the predicted display time. In various embodiments, the example controller 206 is configured to translate the most recently captured image based on one or more of a scenery angle change factor (ACF), a scaling factor (SCF), and a sliding factor (SLF). FIGS. 4A, 4B, 4C are block diagrams illustrating example scenarios for application of one or more of an ACF, SCF, and SLF.

The scenery angle change factor (ACF) provides a measure of angular change between an angle between a scenery angle at the image capture time and a scenery angle at the predicted image display time. The ACF is based on the amount of angular change between a scenery angle at the time of image capture and a scenery angle at the predicted image display time. In various embodiments, the scenery angle at the time of image capture is the angle between a segment in the direction of vehicle travel and a segment between a point in the center of a captured image and a point on the vehicle. In various embodiments, the scenery angle at the predicted image display time is an angle between the segment in the direction of vehicle travel and a segment between a point in the center of the captured image and the point on the vehicle.

When the center of the captured image is directly in front of or directly behind the vehicle (e.g., angular difference between a segment in the direction of travel and a segment from the center of the vehicle to the center of the captured image is zero degrees), then the scenery angle change is zero or negligible. When the center of the captured image is offset from the direction of vehicle travel, then the scenery angle change can be calculated to adjust the estimated image.

In the example of FIG. 4A, an example vehicle 402 is at a first location at a time t₁ with respect to a captured scene 404. In this example, a scenery angle (a₁) 406 is defined between a segment 408 in the direction of travel and a segment 410 from a point 412 at the center of the vehicle 402 to a point 414 at the middle of the captured scene 404. At time t₂, when an estimated image of the captured scene is to be displayed, the vehicle 402 has moved in the direction of travel to a different location with respect to a captured scene 404. In this example, a second scenery angle (a₂) 416 is defined between the segment 408 in the direction of travel and a segment 418 from the point 412 at the center of the vehicle 402 to the point 414 in the middle of the captured scene 404. The movement results in a scenery angle change (a₁-a₂). When generating the estimated image to be displayed at time t₂, the example controller 206 is configured to account for the scenery angle change (a₁-a₂) using an ACF that is derived based on the scenery angle change (a₁-a₂). In various embodiments, the ACF is proportional to the scenery angle change (a₁-a₂). In various embodiments, the ACF is determined using a linear function. In other embodiments, the ACF may be determined using a non-linear function. As used herein a linear function is a function whose graph is a straight line, that is a polynomial function of degree one or zero. A non-linear function is a function whose graph is not a straight line.

The scaling factor (SCF) is variable, increases as the vehicle moves toward the scenery, decreases as the vehicle moves away from the scenery, and is based on the estimated distance travelled by the vehicle between a vehicle position at the image capture and a predicted vehicle position at the predicted display time. In the example of FIG. 4B, an example vehicle 422 is at a first location at a time t₁ with respect to a captured scene 424. A distance (d₁) 426 is defined between the vehicle 422 and a point in the middle of the captured scene 424. At time t₂, when an estimated scene is to be displayed, the vehicle 422 has moved in the direction of travel 428 to a different location with respect to the captured scene. A second distance (d₂) 430 is defined between the vehicle 422 and the point at the middle of the captured scene 424. The movement results in a scenery distance change (d₁-d₂). When generating the estimated scenery to be displayed at time t₂, the example controller 206 is configured to account for the scenery distance change (d₁-d₂) using an SCF that is derived based on the scenery distance change (d₁-d₂). In various embodiments, the SCF is proportional to the scenery distance change (d₁-d₂). In various embodiments, the SCF is determined using a linear function. In other embodiments, the SCF may be determined using a non-linear function.

The sliding factor (SLF) is variable, and provides a measure of the portion of the total field of view (TFOV) of a sensor system to allocate to an instantaneous field of view (IFOV) that is displayed. When the center of the captured image is directly in front of or directly behind the vehicle, then the sliding factor is zero or negligible. When the center of the captured image is offset from the direction of vehicle travel, then the sliding factor is calculated to determine which portion of the TFOV to allocate to the IFOV.

In the example of FIG. 4C, an example vehicle 442 is at a first location at a time t₁ with respect to a captured scene. The imaging system in the vehicle can capture a total field of view (TFOV) 444 that is larger than an instantaneous field of view (IFOV) 446 that is to be displayed on a display device. At time t₂, when an estimated scene is to be displayed, the vehicle 442 has moved in the direction of travel 448 to a different location with respect to a captured scene. A second instantaneous field of view (IFOV) 450 is defined that can be displayed on the display device. The second IFOV 450 is the portion of TFOV 444 that should be displayed at time t₂. When generating the estimated scenery to be displayed at time t₂, the example controller 206 is configured to generate a sliding factor (SLF) for use in determining which portion of the TFOV 444 to display. In various embodiments, the SLF is proportional to the distance traveled between time t₁ and time t₂. In various embodiments, the SLF is determined using a linear function. In other embodiments, the SLF may be determined using a non-linear function. In this example, a distance 452 between the vehicle 442 and objects in the captured scene is approximately the same at time t₁ and at time t₂.

In various embodiments, a depth consideration also exists for each of the ACF, SCF, and SLF. With each of the scenery angle change factor (ACF), scaling factor (SCF), and sliding factor (SLF), as the distance (410/418, 426/430, 452), based on an assumed scene model such as a flat terrain model, of an object in a scene (404/424/444) to the vehicle (402/422/442) increases, any factor change based on vehicle movement from a vehicle location at time t₁ to a vehicle location at time t₂ will decrease. For example, as the distance (410/418, 426/430, 452) approaches infinity, the ACF change will approach zero, the SCF change will approach zero, and the sliding factor will approach zero as the vehicle moves from a vehicle location at time t₁ to a vehicle location at time t₂. Therefore, in various embodiments, the ACF is a function of distance between an obj ect in the scene and the vehicle, the SCF is a function of distance between an object in the scene and the vehicle, and the SLF is a function of distance between an object in the scene and the vehicle.

The example controller 206 is configured by the programming instructions 214 to translate captured images to display images that are adjusted based on the time between capture time and display time. When the capture rate is equal to the display rate (e.g., 60 Hz capture rate for display on a 60 Hz display), the example controller 206 is configured to translate each captured image at a translation rate that is the same rate as the capture rate (e.g., once before display).

In various embodiments, the example controller 206 is configured by the programming instructions 214 to perform image position predictions and translations on the most recently captured image. When the display rate is less than or equal to the image capture rate, e.g., a 120 Hz capture rate for display on a 60 Hz display, then image position predictions and translations are performed at most once on a captured image.

In various embodiments, the example controller 206 is configured by the programming instructions 214 to perform image position predictions to smooth images captured at a much slower rate that are to be displayed on a display with a much higher display rate. When the capture rate is less than the display rate, e.g., a 60 Hz capture rate for display on 120-480 Hz displays, the example controller 206 is configured to perform multiple position predictions and translations on each captured image at a higher translation rate to accommodate a higher display rate. For example, when the capture rate is 60 Hz and the display rate is 120 Hz, the example controller 206 is configured to perform image position predictions to translate each captured image at a translation rate that is two times higher than the capture rate (e.g., twice before performing image position predictions and translations on the next captured image). When the capture rate is 60 Hz and the display rate is 240 Hz, the example controller 206 is configured to perform image position predictions to translate each captured image at a translation rate that is four times higher than the capture rate (e.g., four times before performing image position predictions and translations on the next captured image). When the capture rate is 60 Hz and the display rate is 480 Hz, the example controller 206 is configured to perform image position predictions to translate each captured image at a translation rate that is eight times higher than the capture rate (e.g., eight times before performing image position predictions and translations on the next captured image). In these embodiments, the image translation could be on the captured image or on the previously estimated image.

In various embodiments, when repeated image position predictions and translations are performed with respect to a single captured image as discussed above, overlay symbiology may be generated in a separate frame buffer, such as a frame buffer object (FBO), and reused in an overlay over the estimated images. This can help avoid symbiology jitter.

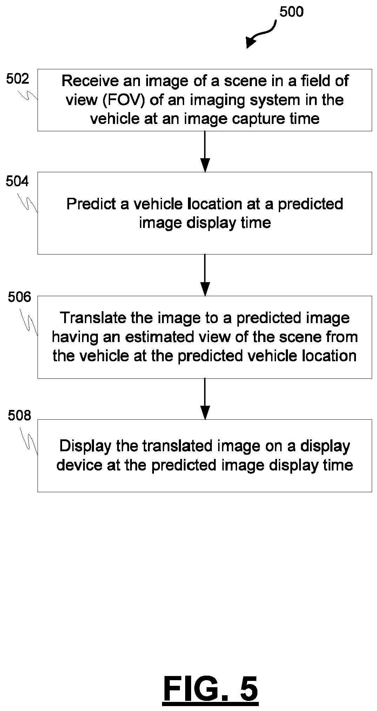

FIG. 5 is a process flow chart depicting an example process for providing an image of a scene outside of a moving vehicle. The order of operation within the process 500 is not limited to the sequential execution as illustrated in the figure, but may be performed in one or more varying orders as applicable and in accordance with the present disclosure.

The example process 500 includes receiving an image of a scene in a field of view (FOV) of an imaging system in the vehicle at an image capture time (operation 502) and predicting a vehicle location at a predicted image display time (operation 504).

The example process 500 includes translating the image to a predicted image having an estimated view of the scene from the vehicle at the predicted vehicle location (operation 506). The translating is based on a predicted render time, a predicted display time, an amount of predicted position change between vehicle position at the image capture time and predicted vehicle position at the predicted image display time. The example process 500 includes displaying the translated image on a display device at the predicted image display time (operation 508).

These aspects and other embodiments of the method may include one or more of the following features. The translating the image may include translating the image based on a scaling factor that is based on the estimated distance travelled by the vehicle between a vehicle position at the image capture and a predicted vehicle position at the predicted display time. The translating the image may include translating the image based on an amount of scenery angle change between a scenery angle at the image capture time and a scenery angle at the predicted image display time. The translating the image may include calculating a scenery angle change factor, wherein the scenery angle change factor is based on an amount of angular change between a scenery angle at the time of image capture and a scenery angle at the predicted image display time. The translating the image may include translating the image based on a sliding factor for use in determining which portion of a total field of view (TFOV) to allocate to an instantaneous field of view (IFOV) that is displayed. The imaging system has an image capture rate, and the method may further include translating an image to an estimated image at a translation rate that is the same as or lower than the image capture rate. The imaging system has an image capture rate, and the method may further include translating an image to an estimated image at a translation rate that is higher than the capture rate. The imaging system has an image capture rate, and the method may further include translating an image to an estimated image at a translation rate that is higher than the capture rate, wherein the image that is translated is some instances is a previously estimated image.

In another embodiment, a virtual window system for a vehicle is disclosed. The virtual window system includes a display device and a controller. The controller is configured to: receive an image of a scene in a field of view (FOV) of an imaging system of the vehicle at an image capture time; predict a vehicle location at a predicted image display time; translate the image to a predicted image having an estimated view of the scene from the vehicle at the predicted vehicle location based on a predicted render time, a predicted display time, an amount of predicted position change between vehicle position at the image capture time and predicted vehicle position at the predicted image display time; and cause the translated image to be displayed on the display device at the predicted image display time.

These aspects and other embodiments of the virtual window system may include one or more of the following features. To translate the image, the controller may be configured to translate the image based on a scaling factor that is based on the estimated distance travelled by the vehicle between a vehicle position at the image capture and a predicted vehicle position at the predicted display time. To translate the image, the controller may be configured to translate the image based on an amount of scenery angle change between a scenery angle at the image capture time and a scenery angle at the predicted image display time. To translate the image, the controller may be configured to calculate a scenery angle change factor, wherein the scenery angle change factor is based on an amount of angular change between a scenery angle at the time of image capture and a scenery angle at the predicted image display time. To translate the image, the controller may be configured to translate the image based on a sliding factor for use in determining which portion of a total field of view (TFOV) to allocate to an instantaneous field of view (IFOV) that is displayed. The imaging system has an image capture rate, and the controller may be configured to translate an image to an estimated image at a translation rate that is the same as or lower than the image capture rate. The imaging system has an image capture rate, and the controller may be configured to translate an image to an estimated image at a translation rate that is higher than the capture rate. The imaging system has an image capture rate, the controller may be configured to translate an image to an estimated image at a translation rate that is higher than the capture rate, and the image that is translated is some instances may be a previously estimated image.

In another embodiment, non-transitory computer readable media (e.g., computer-readable storage media 212) encoded with processor executable programming instructions (e.g., programming instructions 214) is disclosed (*e.g*., part of controller 206). When the processor executable programming instructions are executed by a processor, a method (*e.g.,* process 500) is performed. The method includes: receiving an image of a scene in a field of view (FOV) of an imaging system in the vehicle at an image capture time; predicting a vehicle location at a predicted image display time; translating the image to a predicted image having an estimated view of the scene from the vehicle at the predicted vehicle location based on a predicted render time, a predicted display time, an amount of predicted position change between vehicle position at the image capture time and predicted vehicle position at the predicted image display time; and displaying the translated image on a display device at the predicted image display time.

These aspects and other embodiments of the non-transitory computer readable media may include one or more of the following features. The translating the image may include translating the image based on a scaling factor that is based on the estimated distance travelled by the vehicle between a vehicle position at the image capture and a predicted vehicle position at the predicted display time. The translating the image may include translating the image based on an amount of scenery angle change between a scenery angle at the image capture time and a scenery angle at the predicted image display time. The translating the image may include calculating a scenery angle change factor, wherein the scenery angle change factor is based on an amount of angular change between a scenery angle at the time of image capture and a scenery angle at the predicted image display time. The translating the image may include translating the image based on a sliding factor for use in determining which portion of a total field of view (TFOV) to allocate to an instantaneous field of view (IFOV) that is displayed. The imaging system has an image capture rate, and the method may further include translating an image to an estimated image at a translation rate that is the same as or lower than the image capture rate. The imaging system has an image capture rate, and the method may further include translating an image to an estimated image at a translation rate that is higher than the capture rate. The imaging system has an image capture rate, and the method may further include translating an image to an estimated image at a translation rate that is higher than the capture rate, wherein the image that is translated is some instances is a previously estimated image.

In another embodiment, a vehicle is disclosed. The vehicle includes an imaging system that includes a plurality of imaging sensors, a display device, and a controller. The controller is configured to: receive an image of a scene in a field of view (FOV) of the imaging system at an image capture time; predict a vehicle location at a predicted image display time; translate the image to a predicted image having an estimated view of the scene from the vehicle at the predicted vehicle location based on a predicted render time, a predicted display time, an amount of predicted position change between vehicle position at the image capture time and predicted vehicle position at the predicted image display time; and cause the translated image to be displayed on the display device at the predicted image display time.

These aspects and other embodiments of the vehicle may include one or more of the following features. To translate the image, the controller may be configured to translate the image based on a scaling factor that is based on the estimated distance travelled by the vehicle between a vehicle position at the image capture and a predicted vehicle position at the predicted display time. To translate the image, the controller may be configured to translate the image based on an amount of scenery angle change between a scenery angle at the image capture time and a scenery angle at the predicted image display time. To translate the image, the controller may be configured to calculate a scenery angle change factor, wherein the scenery angle change factor is based on an amount of angular change between a scenery angle at the time of image capture and a scenery angle at the predicted image display time. To translate the image, the controller may be configured to translate the image based on a sliding factor for use in determining which portion of a total field of view (TFOV) to allocate to an instantaneous field of view (IFOV) that is displayed. The imaging system has an image capture rate, and the controller may be configured to translate an image to an estimated image at a translation rate that is the same as or lower than the image capture rate. The imaging system has an image capture rate, and the controller may be configured to translate an image to an estimated image at a translation rate that is higher than the capture rate. The imaging system has an image capture rate, the controller may be configured to translate an image to an estimated image at a translation rate that is higher than the capture rate, and the image that is translated is some instances may be a previously estimated image.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A vehicle comprising:
an imaging system comprising a plurality of imaging sensors;
a display device; and
a controller configured to:
receive an image of a scene in a field of view (FOV) of the imaging system at an image capture time;
predict a vehicle location at a predicted image display time;
translate the image to a predicted image having an estimated view of the scene from the vehicle at the predicted vehicle location based on a predicted render time, a predicted display time, an amount of predicted position change between vehicle position at the image capture time and predicted vehicle position at the predicted image display time; and
cause the translated image to be displayed on the display device at the predicted image display time.

2. The vehicle of claim 1, wherein to translate the image, the controller is configured to translate the image based on a scaling factor that is based on an estimated distance travelled by the vehicle between a vehicle position at the image capture time and a predicted vehicle position at the predicted display time.

3. The vehicle of claim 2, wherein to translate the image, the controller is configured to translate the image based on an amount of scenery angle change between a scenery angle at the image capture time and a scenery angle at the predicted image display time.

4. The vehicle of claim 3, wherein to translate the image, the controller is configured to calculate a scenery angle change factor, wherein the scenery angle change factor is based on an amount of angular change between a scenery angle at the image capture time and a scenery angle at the predicted image display time.

5. The vehicle of claim 2, wherein to translate the image, the controller is configured to translate the image based on a sliding factor for use in determining which portion of a total field of view (TFOV) to allocate to an instantaneous field of view (IFOV) that is displayed.

6. A method for providing an image of a scene outside of a vehicle, the method comprising:
receiving an image of a scene in a field of view (FOV) of an imaging system in the vehicle at an image capture time;
predicting a vehicle location at a predicted image display time;
translating the image to a predicted image having an estimated view of the scene from the vehicle at the predicted vehicle location based on a predicted render time, a predicted display time, an amount of predicted position change between vehicle position at the image capture time and predicted vehicle position at the predicted image display time; and
displaying the translated image on a display device at the predicted image display time.

7. The method of claim 6, wherein translating the image comprises translating the image based on a scaling factor that is based on an estimated distance travelled by the vehicle between a vehicle position at the image capture time and a predicted vehicle position at the predicted display time.

8. The method of claim 7, wherein translating the image comprises translating the image based on an amount of scenery angle change between a scenery angle at the image capture time and a scenery angle at the predicted image display time.

9. The method of claim 8, wherein translating the image comprises calculating a scenery angle change factor, wherein the scenery angle change factor is based on an amount of angular change between a scenery angle at the image capture time and a scenery angle at the predicted image display time.

10. The method of claim 7, wherein translating the image comprises translating the image based on a sliding factor for use in determining which portion of a total field of view (TFOV) to allocate to an instantaneous field of view (IFOV) that is displayed.
